# EUROPÄISCHE PATENTANMELDUNG

(11) **EP 4 607 729 A1**
(43) Veröffentlichungstag der Anmeldung: **27.08.2025**
(21) Anmeldenummer: 24159470.4
(22) Anmeldetag: 23.02.2024
(51) Int. Cl.: H02H 3/093, H02H 3/00, H02H 3/087, H02H 9/02

(54) **VERFAHREN ZUR VERSORGUNG ZUMINDEST EINER NIEDERSPANNUNGSLAST SOWIE ELEKTRONISCHE STROMVERSORGUNGS- UND/ODER -VERTEILUNGSVORRICHTUNG**

(71) Anmelder: Siemens Aktiengesellschaft, 80333 München (DE)
(72) Erfinder: Hörist, Gerald, 1220 Wien (AT); Paul, Wolfgang, 2344 Maria Enzersdorf (AT)
(74) Vertreter: Siemens Patent Attorneys

(57) **Zusammenfassung**

Zur Versorgung zumindest einer Niederspannungslast (2) mit einem Ausgangsstrom (Iₐ) einer elektronischen Stromversorgungs- und/oder -verteilungsvorrichtung (1, 20) sind für den Ausgangsstrom (Iₐ) mindestens zwei Überstrombereiche (B1, B2) definiert, denen jeweils eine maximale Überstromdauer (t_{B1max}; t_{B2max}) zugeordnet ist. Erfindungsgemäß sind die Überstrombereiche (B1, B2) hinsichtlich ihrer Höhe (H1, H2), ihrer jeweiligen maximalen Überstromdauer (t_{B1max}; t_{B2max}) und/oder ihrer Anzahl an einen Überstrombedarf der Niederspannungslast (2) anpassbar.

Hierdurch kann die elektronische Stromversorgungs- und/oder -verteilungsvorrichtung (1, 20) noch individueller und somit besser an einen Überstrombedarf der Niederspannungslast (2) angepasst werden.

## Beschreibung

Die Erfindung betrifft ein Verfahren zur Versorgung zumindest einer Niederspannungslast mit einem Ausgangsstrom einer elektronischen Stromversorgungs- und/oder -verteilungsvorrichtung gemäß Oberbegriff des Patentanspruchs 1. Die Erfindung betrifft ferner eine elektronische Stromversorgungs- und/oder -verteilungsvorrichtung gemäß Oberbegriff des Patentanspruchs 11.

In der industriellen Automatisierungstechnik (z.B. bei der diskreten Fertigungstechnik oder der Prozesstechnik) oder in der Gebäudeautomatisierung werden in großem Umfang elektronische Stromversorgungsvorrichtungen für eine Versorgung von elektrischen Niederspannungs-Lasten, wie z.B. Steuerungen, Sensoren, Pumpen, Ventile, etc., mit elektrischer Energie aus einem Versorgungsnetz eingesetzt. Die Lasten werden hierzu von der Stromversorgungsvorrichtung mit einer geeigneten, oft vordefinierten Spannung versorgt.

Die Stromversorgungsvorrichtung kann hierzu beispielsweise als ein Gerät, System oder eine Schaltung zur Wandlung einer von einem Energieerzeuger, -speicher oder -versorgungsnetz gelieferten elektrischen Energie ausgebildet sein. Typischerweise wird dazu ein eingangsseitig hohes Spannungsniveau eines einphasigen oder dreiphasigen Versorgungsnetzes, wie z.B. eine 400V- oder 230V-Wechselspannung, auf ein für die Last vordefiniertes, niedrigeres und üblicherweise konstantes Spannungsniveau (z.B. 24 V oder 48 V Gleichspannung als Nennausgangsspannung) auf einer Ausgangsseite der Stromversorgungsvorrichtung umgesetzt.

Derartige Stromversorgungsvorrichtungen sind dabei üblicherweise als getaktete Stromversorgungsvorrichtungen bzw. Schaltnetzteile (manchmal auch als Schaltnetzgeräte bezeichnet) ausgebildet und beispielsweise aus der EP 3322076 A1 bekannt. Sie weisen üblicherweise ein Gehäuse auf und können auf eine Hutschiene montiert werden.

Eine solche getaktete Stromversorgungsvorrichtung bzw. ein solches Schaltnetzteil umfasst in der Regel eine Eingangsstufe, beispielsweise in Form einer Gleichrichtereinheit, einen Zwischenkreis und einen Schaltwandler, durch welche die Wechselspannung aus dem Versorgungsnetz in eine Gleichspannung für die Energieversorgung der Last umgewandelt wird. Von der Stromversorgungsvorrichtung wird die meist unstabilisierte Eingangsspannung dann in eine konstante Ausgangsspannung für die elektrische Last umgesetzt, wobei eine Konstanz der Ausgangsspannung und/oder eines Ausgangsstroms durch eine Regelung des Energieflusses erreicht wird. Je nach Anwendung bzw. je nach Bedarf der jeweiligen Last kann die Ausgangsspannung größer oder kleiner als die Eingangsspannung sein.

Unter einer Stromverteilungsvorrichtung kann beispielsweise ein Gerät oder Modul, eine Anordnung mehrerer Module oder eine Schaltung verstanden werden, welche einen von einer Stromversorgungsvorrichtung (wie z.B. einem Gerät oder einer Schaltung zur Energiewandlung wie eingangs erwähnt) bereitgestellten Strom auf mehrere Abzweige aufteilt, die jeweils eine Niederspannungslast mit Strom versorgen. Eine derartige Stromverteilungsvorrichtung überwacht den Strom in den einzelnen Abzweigen zuverlässig auf Überlast und Kurzschluss. Kurzfristige Stromspitzen in den Abzweigen, z. B. durch hohen Einschaltstrom, lässt sie bis zu einer maximalen Höhe zu. Abzweige mit längerer Überlast bzw. Kurzschluss werden dagegen im Strom begrenzt oder abgeschaltet, während die übrigen Abzweige und daran angeschlossene Verbraucher unterbrechungsfrei weiterversorgt werden. Dazu sind meist Leistungshalbleiter wie z.b. MOSFETs, Bipolartransistoren oder ähnliches in einen Strompfad des Abzweiges eingefügt. So kann ein Totalausfall eines Automatisierungssystems und einer davon gesteuerten Anlage vermieden werden. Aufgrund dieser selektiven Schutzmaßnahmen in Bezug auf die einzelnen Abzweige werden derartige Stromverteilungsvorrichtungen oft auch als "Sicherungsmodule" oder "Selektivitätsmodule" bezeichnet. Das Begrenzen und/oder Schalten der Ströme in den Abzweigen erfolgt dabei üblicherweise mit Hilfe elektronischer Schaltelemente, die in die Abzweige geschaltet sind. Bekannte Sicherungsmodule bzw. Selektivitätsmodule bieten beispielsweise bis zu acht Abzweige bzw. Ausgänge mit einem maximalen Ausgangsstrom von jeweils bis zu 10 A an. Ein derartiges Sicherungsmodul bzw. Selektivitätsmodul ist beispielsweise aus der EP 2 764 592 B1 bekannt.

Niederspannungslasten in den genannten Anwendungsgebieten können kurzzeitige erhöhte Anforderungen an die Ausgangsleistung und den Ausgangsstrom haben, etwa im Anlauf oder während Schaltvorgängen. Höherwertige Schaltnetzgeräte bieten deshalb manchmal die Fähigkeit, für begrenzte Zeit Lasten zu versorgen, die mehr Strom und mehr Leistung aufnehmen, als die Stromversorgungsvorrichtung nominal liefern kann.

Da eine erhöhte Leistungsanforderung in der Regel nur kurzzeitig vorliegt und gleichzeitig Anforderungen wie geringer Kühlbedarf und geringes Bauvolumen der Stromversorgungsvorrichtung erfüllt werden sollen, werden derartige Schaltnetzgeräte auch nur für eine kurzzeitige Überlast ausgelegt. Das bedeutet, dass die Geräte zwar mehr Leistung liefern können als in ihren nominalen Werten angegeben, diese erhöhte Leistung aber nur für eine kurze Zeit zur Verfügung gestellt wird, um zu verhindern, dass es zu einer Überhitzung des Gerätes kommt. Nach Bereitstellung der erhöhten Leistung ist dann eine längere Abkühlphase erforderlich.

Es ist dabei bereits bekannt, die maximal zulässige Zeit für eine kurzzeitige Überlast abhängig von der Höhe der Überlast zu begrenzen.

So sind beispielsweise Schaltnetzgeräte bekannt, bei denen für den Ausgangsstrom zwei unmittelbar benachbarte Überstrombereiche definiert sind, die oberhalb eines Schwellwertes (z.B. des Nennstromes I_{N} oder des Dauerkurzschlussstromes der Stromversorgungsvorrichtungen) liegen und denen jeweils eine maximale Überstromdauer zugeordnet ist. Die maximale Überstromdauer kann dann derart gewählt sein, dass eine unzulässig hohe thermische Belastung der Stromversorgungsvorrichtung vermieden wird. Sie ist in der Regel umso kleiner, je höher der Überstrombereich liegt.

Unter einem "Überstrom" wird dabei ein Strom größer als ein Nennstrom verstanden. Ein "Überstrombereich" wird durch jeweils eine obere und eine untere Bereichsgrenze definiert. Die obere Bereichsgrenzen wird durch einen größeren Wert des Überstroms und die untere Bereichsgrenze wird durch einen kleineren Wert des Überstroms definiert. Eine "Höhe" des Überstrombereichs wird durch eine Differenz zwischen dem größerem und dem kleineren Wert der Bereichsgrenzen definiert.

Beispielsweise können folgende zwei Überstrombereiche und maximale Überstromdauern definiert sein:

| Bereich | Bereichsgrenzen | maximale Überstromdauer |
|---|---|---|
| 1 | > I_{N} bis 1,5*I_{N} | 5 s |
| 2 | > 1,5*I_{N} bis 3*I_{N} | 25 ms |

Es kann somit für die genannten Überstromdauern mehr Strom bzw. Leistung abgegeben werden, als in den Nominalwerten des Schaltnetzgerätes angeführt ist. Wenn eine maximale Überstromdauer abgelaufen ist, wird die erhöhte Strom- bzw. Leistungsabgabe gesperrt und eine Abkühlphase gestartet.

Ausgehend hiervon ist es Aufgabe vorliegender Erfindung, ein Verfahren bzw. eine Stromversorgungs- und/oder -verteilungsvorrichtung anzugeben, die eine noch bessere Stromversorgung einer Niederspannungslast ermöglichen.

Die Lösung dieser Aufgabe gelingt durch ein Verfahren gemäß Patentanspruch 1 sowie eine Stromversorgungs- und/oder -verteilungsvorrichtung gemäß Patentanspruch 11. Vorteilhafte Ausgestaltungen sind jeweils Gegenstand der Unteransprüche.

Bei einem erfindungsgemäßen Verfahren zur Versorgung zumindest einer Niederspannungslast mit einem Ausgangsstrom einer elektronischen Stromversorgungs- und/oder -verteilungsvorrichtung sind für den Ausgangsstrom mindestens zwei (vorzugsweise unmittelbar benachbarte) Überstrombereiche definiert, denen jeweils eine maximale Überstromdauer zugeordnet ist. Die Überstrombereiche sind dabei hinsichtlich ihrer Höhe, ihrer jeweiligen maximalen Überstromdauer und/oder ihrer Anzahl an einen Überstrombedarf der Niederspannungslast anpassbar bzw. können daran angepasst werden. Sie sind vorzugsweise oberhalb eines Schwellwertes für den Ausgangsstrom, z.B. oberhalb des Nennstromes I_{N} oder des Dauerkurzschlussstromes der Stromversorgungs- und/oder -verteilungsvorrichtung, angeordnet.

Je nachdem, ob die Last für sehr kurze Zeit einen sehr hohen Überstrombedarf oder aber für eine längere Zeit einen eher geringen Überstrombedarf hat, können innerhalb thermischer Belastungsgrenzen der Stromversorgungs- und/oder -verteilungsvorrichtung die Überstrombereiche dann individuell hinsichtlich ihrer Höhe, ihrer jeweiligen maximalen Überstromdauer und/oder ihrer Anzahl an eine an die Stromversorgungs- und/oder -verteilungsvorrichtung ausgangsseitig angeschlossene Niederspannungslast angepasst werden: Beispielsweise kann die Stromversorgungs- und/oder -verteilungsvorrichtung an einen kurzzeitig definierten Überlastbetrieb von Motoren oder an eine thermische Limitierung einer Verdrahtung angepasst werden. Hierdurch wird eine noch individuellere und somit bessere Stromversorgung einer Niederspannungslast ermöglicht.

Beispielsweise können einem Nutzer der Stromversorgungs- und/oder -verteilungsvorrichtung mehrere unterschiedliche Überlastprofile zur Auswahl angeboten werden, die dann jeweils die Überstrombereiche hinsichtlich ihrer Anzahl, Höhe und maximalen Überstromdauer definieren.

Beispielsweise können drei Überlastprofile P1 bis P3 mit jeweils gleicher Anzahl aber jeweils unterschiedlicher Höhe und teilweise unterschiedlicher zugeordneter maximaler Überstromdauer der Überstrombereiche B₁, B₂ gemäß folgender Tabelle angeboten werden, wobei die Bereiche in Bezug auf einen Nennstrom IN der Stromversorgungs- und/oder-verteilungsvorrichtung definiert sind:

| Profil | Bereich | Bereichsgrenzen | maximale Überstromdauer |
|---|---|---|---|
| P1 | 1 | > I_{N} bis 1,5*I_{N} | 5 s |
| | 2 | > 1,5*I_{N} bis 3*I_{N} | 25 ms |
| P2 | 1 | > I_{N} bis 1,3*I_{N} | 10 s |
| | 2 | > 1,3*I_{N} bis 3*I_{N} | 25 ms |
| P3 | 1 | > I_{N} bis 1,8*I_{N} | 1 s |
| | 2 | > 1,8*I_{N} bis 3*I_{N} | 25 ms |

Die Überstrombereiche sind hierbei unmittelbar benachbart und oberhalb des Nennstromes I_{N} der Stromversorgungs- und/oder -verteilungsvorrichtung angeordnet.

Gemäß einem anderen Beispiel können einem Nutzer der Stromversorgungs- und/oder -verteilungsvorrichtung drei Überlastprofile N1 bis N3 mit jeweils unterschiedlicher Anzahl von Überstrombereichen mit teilweise unterschiedlicher Höhe und unterschiedlicher zugeordneter maximaler Überstromdauer gemäß folgender Tabelle angeboten werden, wobei die Bereiche in Bezug auf einen Nennstrom I_{N} der Stromversorgungs- und/oder -verteilungsvorrichtung definiert sind:

| Profil | Bereich | Bereichsgrenzen | maximale Überstromdauer |
|---|---|---|---|
| N1 | 1 | > I_{N} bis 1,5*I_{N} | 5 s |
| | 2 | > 1 ,5*I_{N} bis 3*I_{N} | 25 ms |
| N2 | 1 | > I_{N} bis 1,3*I_{N} | 10 s |
| | 2 | > 1 ,3*I_{N} bis 1,5*I_{N} | 5 s |
| | 3 | > 1,5*I_{N} bis 3*I_{N} | 25 ms |
| N3 | 1 | > I_{N} bis 1,3*I_{N} | 10 s |
| | 2 | > 1 ,3*I_{N} bis 1,5*I_{N} | 5 s |
| | 3 | > 1,5*I_{N} bis 1,8*I_{N} | 1 s |
| | 4 | > 1,8*I_{N} bis 3*I_{N} | 25 ms |

Die Überstrombereiche sind hierbei unmittelbar benachbart und oberhalb des Nennstromes I_{N} der Stromversorgungs- und/oder -verteilungsvorrichtung angeordnet.

Die Stromversorgungs- und/oder -verteilungsvorrichtung kann beispielsweise als ein Gerät, System oder eine Schaltung zur Wandlung einer von einem Energieerzeuger, -speicher oder -versorgungsnetz gelieferten elektrischen Energie, insbesondere als ein Schaltnetzteil bzw. Schaltnetzgerät ausgebildet sein. Der Ausgangsstrom kann sich dann auf einen Strom an einem Ausgang dieses Gerätes, Systems oder dieser Schaltung beziehen.

Die Stromversorgungs- und/oder -verteilungsvorrichtung kann beispielsweise aber auch als ein Sicherungsmodul bzw. Selektivitätsmodul mit mehreren Abzweigen ausgebildet sein und der Ausgangsstrom kann sich auf einen Strom an einem Ausgang eines Abzweiges dieses Moduls beziehen.

Die Stromversorgungs- und/oder -verteilungsvorrichtung kann auch eine Anordnung mehrerer miteinander verschalteter Sicherungsmodule bzw. Selektivitätsmodule mit jeweils einem oder mehreren Abzweigen umfassen, die alle von einer gleichen Versorgungsspannung versorgt werden und vorzugsweise zumindest Informationen über die jeweiligen Lastzustände untereinander austauschen oder an eine übergeordnete Instanz melden, welche bei Bedarf auch Schalt-Befehle rückmelden kann. Die Stromversorgungs- und/oder -verteilungsvorrichtung kann auch eine Kombination einer Stromversorgungseinrichtung (z.B. Wandler gemäß vorstehender Beschreibung) und einer Anzahl von Selektivitätsmodulen (gemäß vorstehender Beschreibung) umfassen, wobei im Überlastfall die jeweils geringere Überlastfähigkeit von Wandler oder Selektivitätsmodul(en) die maximal mögliche Überlastfähigkeit definiert.

Gemäß einer vorteilhaften Ausgestaltung des erfindungsgemäßen Verfahrens werden mehrere Niederspannungslasten mit jeweils einem Ausgangsstrom einer elektronischen Stromversorgungs- und/oder -verteilungsvorrichtung versorgt, wobei für jeden der Ausgangsströme in der Stromversorgungs- und/oder -verteilungsvorrichtung jeweils mindestens zwei Überstrombereiche definiert sind, denen jeweils eine maximale Überstromdauer zugeordnet ist, wobei die Überstrombereiche hinsichtlich ihrer jeweiligen Höhe, ihrer jeweiligen maximalen Überstromdauer und/oder ihrer jeweiligen Anzahl an einen Überstrombedarf der jeweiligen Niederspannungslast anpassbar sind.

Die Anpassung der Überstrombereiche kann dabei sehr benutzerfreundlich über eine Nutzer-Schnittstelle der Stromversorgungs- und/oder -verteilungsvorrichtung erfolgen. Die Nutzer-Schnittstelle kann beispielsweise eine in die Stromversorgungs- und/oder -verteilungsvorrichtung integrierte grafische Benutzeroberfläche (z.B. ein Display) sein. Es kann aber auch eine Nutzer-Schnittstelle sein, über die ein gesondertes Gerät mit einer grafische Benutzeroberfläche (z.B. ein Notebook oder Smartphone) über das Internet oder ein anderes Kommunikationsmedium mit der Stromversorgungs- und/oder -verteilungsvorrichtung verbindbar ist.

Gemäß einer vorteilhaften Ausgestaltung wird der Ausgangsstrom innerhalb eines der Überstrombereiche nur für eine maximale Dauer bereitgestellt, die der dem jeweiligen Überstrombereich zugeordneten maximalen Überstromdauer entspricht. Mit anderen Worten wird bei einem zeitweisen Verlauf (bzw. Verweilen) des Ausgangsstromes ausschließlich nur innerhalb eines der Überstrombereiche, d.h. der Ausgangsstrome verlässt diesen Überstrombereich nicht, der Ausgangsstrom nur für die dem jeweiligen Überstrombereich zugeordneten maximalen Überstromdauer bereitgestellt. Diese maximale Überstromdauer kann dann so definiert werden, dass die Stromversorgungs- und/oder -verteilungsvorrichtung durch die Strombereitstellung nicht thermisch überlastet wird.

Es ist aber auch denkbar, dass die maximale Dauer für die Bereitstellung des Ausgangsstromes einem vorgebbaren Wert innerhalb der maximalen Überstromdauer des Überstrombereiches entspricht. Durch eine derartige Reduzierung der maximalen Überstromdauer kann beispielsweise gezielt eine Last geschützt werden oder es kann gezielt ein gewünschter Verlauf des Ausgangsstromes eingestellt werden.

Kommt es zu einem zwischenzeitlichen Verlassen des Überstrombereiches, kann diese maximale Dauer zusätzlich auch abhängig von etwaigen Abkühlzeiten sein.

Gemäß einer weiteren vorteilhaften Ausgestaltung wird der Ausgangsstrom innerhalb mehrerer der Überstrombereiche nur für eine maximale Dauer bereitgestellt, die von einer Verweildauer des Ausgangsstromes in den jeweiligen Überstrombereichen abhängt. Mit anderen Worten wird bei einem zeitweisen Verlauf (bzw. Verweilen) des Ausgangsstromes ausschließlich innerhalb mehrerer der Überstrombereiche, d.h. der Ausgangsstrom verlässt diese mehreren Überstrombereiche zeitweise nicht, der Ausgangsstrom in dieser Zeit nur für eine maximale Dauer bereitgestellt, die von einer Verweildauer des Ausgangsstromes in den jeweiligen Überstrombereichen abhängt. Diese maximale Dauer kann dann so definiert werden, dass die Stromversorgungs- und/oder -verteilungsvorrichtung durch die Strombereitstellung nicht thermisch überlastet wird. Ein Beispiel hierfür wäre ein Eintreten des Ausgangsstromes in einen ersten der Überstrombereiche und ein Verlauf des Ausgangsstromes über mehrere Überstrombereiche hinweg bis zu einem Austreten des Ausgangsstromes aus einem letzten der Überstrombereiche.

Hier liegt die Überlegung zugrunde, dass im Fall, dass eine einem Überstrombereich zugeordnete maximale Überstromdauer nicht vollständig ausgenutzt wird, noch thermische Reserven für einen Strom in einer oder mehreren anderen davon unterschiedlichen Überstrombereichen bestehen, die noch ausgenutzt werden können. Letztendlich wird die thermische Belastung der Stromversorgungs- und/oder -verteilungsvorrichtung durch die Gesamtheit der jeweiligen Verweildauern des Ausgangstromes in den verschiedenen Überstrombereichen bestimmt.

Es ist somit ein Wechseln bzw. Umschalten des Ausgangsstromes zwischen den mehreren Überstrombereichen möglich, wobei die maximale Dauer der Bereitstellung des Überstromes automatisch angepasst wird. Die Stromversorgungs- und/oder -verteilungsvorrichtung kann sich somit automatisch selbst der Niederspannungslast anpassen, d.h. sie ist quasi "selbst adaptiv" in Bezug auf die Niederspannungslast. Ein Nutzer muss sich dann nicht vertieft mit den Leistungsanforderungen seiner Niederspannungslast beschäftigen.

Kommt es zu einem zwischenzeitlichen Verlassen der mehreren Überstrombereiche, kann diese maximale Dauer zusätzlich auch abhängig von etwaigen Abkühlzeiten sein.

Nach Ablauf der maximalen Dauer wird der Ausgangsstrom vorzugsweise auf einen definierten Wert begrenzt oder unterbrochen. Der definierte Wert für die Begrenzung befindet sich vorzugsweise unterhalb des untersten Überstrombereiches, z. B. ist es der Nennstrom oder der Dauerkurzschlussstrom der Stromversorgungs- und/oder -verteilungsvorrichtung. Der definierte Wert kann dabei von einem oder mehreren Parametern abhängig sein, z.B. von der Umgebungstemperatur, von Kühlbedingungen oder von der Eingangsspannung der Stromversorgungs- und/oder -verteilungsvorrichtung. Der definierte Wert kann somit auch dynamisch erst kurz vor dem Zeitpunkt der Strombegrenzung ermittelt werden.

Bei einer derartigen Strombegrenzung wird sich bei weiterhin vorliegender erhöhter Last dann die Ausgangsspannung reduzieren. Ein derartiger Betriebszustand kann dann zeitlich unbegrenzt oder zeitlich begrenzt möglich sein. Bei dem zeitlich unbegrenzten Betriebszustand wird die reduzierte Ausgangsleistung bzw. der reduzierte Ausgangsstrom dann während einer gesamten Abkühlphase weiter geliefert. Bei dem zeitlich begrenzten Betriebszustand kann am Ende der zeitlichen Begrenzung eine Abschaltung des Gerätes erfolgen. Es kann dann nach einer Abschaltung und einer damit verbundenen Abkühlphase entweder ein manuelles oder von einer in der Stromversorgungs- und/oder -verteilungseinrichtung oder extern befindlichen Steuerung veranlasstes Wiedereinschalten erfolgen, um einen Wiederanlauf zu ermöglichen.

Das vorstehend beschrieben Überlastverhalten kann besonders einfach dadurch realisiert werden, dass jedem der Überstrombereiche jeweils ein Zähler zugeordnet ist.

Mit derartigen Zählern kann sehr einfach eine thermische Auslastung der Stromversorgungs- und/oder -verteilungsvorrichtung durch den jeweiligen Überstrombereich ermittelt werden. Der Zählerwert repräsentiert dann eine zu einem bestimmten Zeitpunkt vorliegende Höhe der Auslastung der thermischen Kapazität bzw. der thermischen Reserve der Stromversorgungs- und/oder -verteilungsvorrichtung durch den jeweils zugeordneten Überstrombereich, d.h. im Umkehrschluss ein Maß dafür, wieviel Erwärmung im gegebenen Überlastbereich noch toleriert werden kann, ehe eine Grenztemperatur an mindestens einem Bauteil erreicht ist.

Überstromzeiten mit entsprechender Erwärmung der Stromversorgungs- und/oder -verteilungsvorrichtung können dadurch berücksichtigt werden, dass der Zähler seine Zählerwerte in einer ersten Richtung ändert (z.B. erhöht), wenn der Ausgangsstrom innerhalb des ihm zugeordneten Überstrombereiches liegt. Abkühlzeiten können dadurch berücksichtigt werden, dass der Zähler seine Zählerwerte in einer zu der ersten Richtung entgegengesetzten zweiten Richtung ändert (z.B. reduziert), wenn der Ausgangsstrom unterhalb des ihm zugeordneten Überstrombereiches liegt, insbesondere wenn der Ausgangsstrom nach Ablauf einer maximalen Dauer auf einen vordefinierten Wert begrenzt wird.

Die Geschwindigkeit der Änderung der Zählerwerte in der ersten Richtung (z.B. Erhöhung) oder zweiten Richtung (z.B. Reduzierung) kann dann direkt die Zunahme bzw. Abnahme der thermischen Belastung durch den jeweiligen Ausgangsstrom widerspiegeln. In der Regel wird die Geschwindigkeit der Änderung der Zählerwerte in der ersten Richtung (z.B. Erhöhung) umso schneller erfolgen, je höher der Strom ist, und immer deutlich schneller sein als die Geschwindigkeit der Änderung der Zählerwerte (z.B. Reduzierung) aufgrund Abnahme der thermischen Belastung durch eine Abkühlung.

Zähler unterschiedlicher Überstrombereiche können dann mit jeweils unterschiedlichen Geschwindigkeiten zählen. Beispielsweise kann ein Zähler eines niedrigeren Überstrombereiches mit einer niedrigeren Geschwindigkeit als ein Zähler eines höheren Überstrombereiches zählen. Hierdurch können unterschiedliche Erwärmungsgeschwindigkeiten repräsentiert werden, die im einfachsten Fall dadurch bedingt sind, dass ein höherer Strom I gemäß der Beziehung Pv = R*I² (mit P_{V} = thermische Verlustleistung, R = ohmscher Widerstand) an bestimmten elektrischen parasitären Widerständen wie dem Innenwiderstand von Halbleitern oder Wickelgütern überproportional steigende Verluste hervorruft.

Die einem jeweiligen Überstrombereich zugeordnete maximale Überstromstromdauer kann durch eine vorgegebene Bedingung für einen Zählerwert (z.B. einen Maximalwert) des zugeordneten Zählers definiert sein.

Im vorstehend beschriebenen Fall, dass der Ausgangsstrom innerhalb eines der Überstrombereiche verläuft, ist dann gemäß einer besonders einfachen Ausgestaltung die maximale Dauer der Bereitstellung des Überstromes erreicht, wenn der dem Überstrombereich zugeordnete Zähler eine vorgegebene Bedingung erfüllt (z.B. einen definierten Maximalwert erreicht).

Im vorstehend beschriebenen Fall, dass der Ausgangsstrom innerhalb mehrerer der Überstrombereiche verläuft, ist dann gemäß einer besonders einfachen Ausgestaltung die maximale Dauer der Bereitstellung des Überstromes erreicht, wenn eine Kombination (z.B. Summe) der Zählerwerte der den mehreren Überstrombereichen zugeordneten Zähler eine vorgegebene Bedingung erfüllt (z.B. einen definierten Maximalwert erreicht).

Eine Begrenzung des Ausgangsstrom auf den definierten Wert kann dann aufgehoben werden, wenn mindestens einer der Zähler einen anderen (z.B. niedrigeren) Zählerstand als im Zeitpunkt des Eintretens der Strombegrenzung erreicht hat. Die Zeitdauer für die Begrenzung des Ausgangsstromes kann auch einstellbar sein, soweit dies thermisch vertretbar ist. Die Zeitdauer bis zum Aufheben der Strombegrenzung kann auch abhängig sein von einem oder mehreren Parametern wie z.B. von Umgebungstemperatur, Kühlbedingung oder Eingangsspannung der Stromversorgungs- und/oder -verteilungsvorrichtung.

Gemäß einer weiteren vorteilhaften Ausgestaltung beträgt die Höhe der Überstrombereiche weniger als 1/10 des Nennstromes der Stromversorgungs- und/oder -verteilungsvorrichtung. Es können somit eine Vielzahl von Überstrombereichen bzw. Profilen bereitgestellt werden, mit denen dann selbst adaptiv in Bezug auf die Last im Idealfall eine I₂ₜ-Chrakteristik eines Leitungsschutzschalters nachgebildet werden kann. Hierdurch können auch kurzzeitige sehr hohe Anlaufströme von Motoren zugelassen werden, eine lange geringe Überlast dieses Motors dann aber nach entsprechender Zeit trotzdem zur Strombegrenzung führen. Eine Begrenzung in der Höhe und Anzahl der Überstrombereiche kann sich ggf. durch eine Auflösungsgrenze in der A/D-Wandlung von Messwerten des Ausgangsstromes ergeben.

Bei einem vorstehend erläuterten Verfahren, bei dem mehrerer Niederspannungslasten mitjeweils einem Ausgangsstrom einer elektronischen Stromversorgungs- und/oder -verteilungsvorrichtung versorgt werden, ist gemäß einer weiteren vorteilhaften Ausgestaltung eine maximale Dauer einer Bereitstellung eines der mehreren Ausgangsströme innerhalb eines der für ihn definierten Überstrombereiche oder innerhalb der mehreren für ihn definierten Überstrombereiche abhängig von zumindest einem anderen der mehreren Ausgangsströme.

Hierbei liegt der Gedanke zugrunde, dass für einen oder mehrere der anderen Ausgangsströme zeitgleich frei gehaltene, aber nicht genutzte thermische Auslastungen (d.h. deren "Überlastkontingente") der Stromversorgungs- und/oder -verteilungsvorrichtung für einen oder mehrere der anderen Ausgangsströme genutzt werden können, um bei diesem (diesen) die maximale Dauer der Bereitstellung des Überlaststromes zu erhöhen. Dies könnte beispielsweise anhand einer festgelegten Priorisierung der Ausgangsströme erfolgen
Bei Einsatz von Zählern kann dies sehr einfach durch eine übergeordnete Überwachung der Zählerwerte sämtlicher Zähler erfolgen. Beispielsweise kann geprüft werden, ob eine Kombination, insbesondere Summe, der Zählerwerte sämtlicher Zähler eine vorgegebene Bedingung (z.B. Maximalwert) erfüllt und in Abhängigkeit davon die maximale Dauer der Bereitstellung des ersten Ausgangsstromes (bzw. weiterer Ausgangsströme) erfolgen.

Ein übergeordnetes Überlastmanagement kann dann die bestehenden Überlastkontingente den einzelnen Ausgangsströmen zuteilen.

Dies könnte beispielsweise dann relevant sein, wenn Ausgangskreise der Ausgangsströme thermisch miteinander verbunden sind, z.B. über einen gemeinsamen Kühlkörper, eine gemeinsame Drossel für einen Summenstrom der Ausgangsströme, eine gemeinsame 0V-Klemme der Ausgangsströme etc.

Dabei kann durch die einzelnen Ausgänge und deren thermische Auslastung, sowie durch die eventuell eingeschränkte thermische Verbindung der einzelnen Ausgänge untereinander, der Fall auftreten, dass die Nutzung der noch nicht abgerufenen Überlasten einem vorgegebenen Modell folgen muss, um eine lokale Überhitzung zu vermeiden.

Die erfindungsgemäße Aufgabe wird auch gelöst durch eine elektronische Stromversorgungs- und/oder -verteilungsvorrichtung, die ausgebildet ist zur Bereitstellung zumindest eines Ausgangsstromes zur Versorgung einer Niederspannungslast, wobei für den Ausgangsstrom mindestens zwei Überstrombereiche definiert, denen jeweils eine maximale Überstromdauer zugeordnet ist. Die Überstrombereiche sind dabei hinsichtlich ihrer Höhe, ihrer jeweiligen maximalen Überstromdauer und/oder ihrer Anzahl an einen Überstrombedarf der Niederspannungslast anpassbar.

Die Stromversorgungs- und/oder -verteilungsvorrichtung kann beispielsweise als ein Gerät, System oder eine Schaltung zur Wandlung einer von einem Energieerzeuger, -speicher oder -versorgungsnetz gelieferten elektrischen Energie, insbesondere als eine Schaltnetzteil bzw. Schaltnetzgerät ausgebildet sein. Der Ausgangsstrom kann sich dann auf einen Strom an einem Ausgang dieses Gerätes, Systems oder dieser Schaltung beziehen.

Die Stromversorgungs- und/oder -verteilungsvorrichtung kann beispielsweise auch als ein Sicherungsmodul bzw. Selektivitätsmodul mit mehreren Abzweigen ausgebildet sein und der Ausgangsstrom kann sich auf einen Strom an einem Ausgang eines Abzweiges dieses Moduls beziehen.

Gemäß einer Ausgestaltung ist die elektronische Stromversorgungs- und/oder -verteilungsvorrichtung ausgebildet zur Bereitstellung mehrerer Ausgangsströme zur Versorgung jeweils einer Niederspannungslast, wobei für jeden der Ausgangsströme jeweils mindestens zwei Überstrombereiche definiert sind, denen jeweils eine maximale Überstromdauer zugeordnet ist, wobei die Überstrombereiche hinsichtlich ihrer jeweiligen Höhe, ihrer jeweiligen maximalen Überstromdauer und/oder ihrer jeweiligen Anzahl an einen Überstrombedarf der jeweiligen Niederspannungslast anpassbar sind.

Zur Anpassung der Überstrombereiche kann die Stromversorgungs- und/oder -verteilungsvorrichtung eine Nutzerschnittstelle umfassen.

Gemäß einer weiteren vorteilhaften Ausgestaltung ist die Stromversorgungs- und/oder -verteilungsvorrichtung ausgebildet, innerhalb eines der Überstrombereiche den jeweiligen Ausgangsstrom nur für eine maximale Dauer bereitzustellen, die der dem jeweiligen Bereich zugeordneten maximalen Überstromdauer entspricht, oder die einem vorgebbaren Wert innerhalb dieser maximalen Überstromdauer entspricht.

Gemäß einer besonders vorteilhaften Ausgestaltung ist die Stromversorgungs- und/oder -verteilungsvorrichtung ausgebildet, innerhalb mehrerer der Überstrombereiche den jeweiligen Ausgangsstrom nur für eine maximale Dauer bereitzustellen, die von einer Verweildauer des Ausgangsstromes in den jeweiligen Überstrombereichen abhängt.

Die Stromversorgungs- und/oder -verteilungsvorrichtung ist vorzugsweise ausgebildet, nach Ablauf der maximalen Dauer den jeweiligen Ausgangsstrom auf einen definierten Wert zu begrenzen oder zu unterbrechen.

Gemäß einer weiteren besonders vorteilhaften Ausgestaltung weist die Stromversorgungs- und/oder -verteilungsvorrichtung für jeden der Überstrombereiche jeweils einen Zähler auf.

Gemäß einer weiteren vorteilhaften Ausgestaltung ist die Stromversorgungs- und/oder -verteilungsvorrichtung derart ausgebildet, dass der Zähler seine Zählerwerte in einer ersten Richtung ändert, wenn der Ausgangsstrom innerhalb des ihm zugeordneten Überstrombereiches liegt, und vorzugsweise seine Zählerwerte in einer zu der ersten Richtung entgegengesetzten zweiten Richtung ändert, wenn der Ausgangsstrom unterhalb des ihm zugeordneten Überstrombereiches liegt, insbesondere wenn der Ausgangsstrom nach Ablauf einer maximalen Dauer auf einen vordefinierten Wert begrenzt ist.

Zähler unterschiedlicher Überstrombereiche können dann mit jeweils unterschiedlichen Geschwindigkeiten zählen.

Im vorstehend beschriebenen Fall, dass der Ausgangsstrom innerhalb eines der Überstrombereiche verläuft, ist dann vorzugsweise die maximale Dauer der Bereitstellung des Überstromes erreicht, wenn der dem Überstrombereich zugeordnete Zähler eine vorgegebene Bedingung erfüllt (z.B. einen definierten Maximalwert erreicht).

Im vorstehend beschriebenen Fall, dass der Ausgangsstrom innerhalb mehrerer der Überstrombereiche verläuft, ist dann vorzugsweise die maximale Dauer der Bereitstellung des Überstromes erreicht, wenn eine Kombination (z.B. Summe) der Zählerwerte der den mehreren Überstrombereichen zugeordneten Zähler eine vorgegebene Bedingung erfüllt (z.B. einen definierten Maximalwert erreicht).

Gemäß einer weiteren vorteilhaften Ausgestaltung ist die Stromversorgungs- und/oder -verteilungsvorrichtung derart ausgebildet, dass die Begrenzung des Ausgangsstrom auf den vordefinierten Wert aufgehoben wird, wenn mindestens einer der Zähler einen anderen (z.B. niedrigeren) Zählerstand als im Zeitpunkt des Eintretens der Strombegrenzung erreicht hat.

Gemäß einer weiteren vorteilhaften Ausgestaltung beträgt die Höhe der Überstrombereiche weniger als 1/10 des Nennstromes der Stromversorgungs- und/oder -verteilungsvorrichtung.

Bei einer vorstehend erläuterten elektronischen Stromversorgungs- und/oder -verteilungsvorrichtung, die ausgebildet ist zur Bereitstellung mehrerer Ausgangsströme zur Versorgung jeweils einer Niederspannungslast, ist gemäß einer vorteilhaften Ausgestaltung eine maximale Dauer einer Bereitstellung eines der mehreren Ausgangsströme innerhalb des für ihn definierten Überstrombereiches oder innerhalb der mehreren für ihn definierten Überstrombereiche abhängig von zumindest einem anderen der mehreren Ausgangsströme.

Die für das erfindungsgemäße Verfahren genannten Vorteile gelten entsprechend für die erfindungsgemäße Stromversorgungs- und/oder -verteilungsvorrichtung.

Die zu dem erfindungsgemäßen Verfahren und zu der erfindungsgemäßen Stromversorgungs- und/oder -verteilungsvorrichtung genannten vorteilhaften Ausgestaltungen können grundsätzlich auch bei einem Verfahren gemäß Oberbegriff des Anspruchs 1 bzw. bei einer Stromversorgungs- und/oder -verteilungsvorrichtung gemäß Oberbegriff des Anspruchs 11 zur Anwendung kommen, d.h. auch bei einem Verfahren bzw. einer Stromversorgungs- und/oder -verteilungsvorrichtung, bei dem bzw. der die Überstrombereiche nicht hinsichtlich ihrer Höhe, der maximalen Überstromdauer und/oder ihrer Anzahl an einen Überstrombedarf der Niederspannungslast anpassbar sind.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: einen schematischen Aufbau einer erfindungsgemäßen Stromversorgungsvorrichtung mit einem einzigen Ausgangsstrom,
- FIG 2: eine schematische Darstellung eines Überlastprofils mit zwei Überstrombereichen,
- FIG 3: eine schematische Darstellung eines Überlastprofils mit vier Überstrombereichen,
- FIG 4: einen ersten beispielhaften Verlauf eines Ausgangsstromes bei den Überstrombereichen von FIG 3,
- FIG 5: einen zweiten beispielhaften Verlauf eines Ausgangsstromes bei den Überstrombereichen von FIG 3,
- FIG 6: einen dritten beispielhaften Verlauf eines Ausgangsstromes bei den Überstrombereichen von FIG 3,
- FIG 7: einen vierten beispielhaften Verlauf eines Ausgangsstromes bei den Überstrombereichen von FIG 3,
- FIG 8: eine schematische Darstellung eines Überlastprofils mit Überstrombereichen mit einer Höhe von weniger als 1/10 des Nennstroms,
- FIG 9: eine schematische Darstellung einer erfindungsgemäßen Stromverteilungsvorrichtung mit mehreren Abzweigen und Ausgangsströmen.

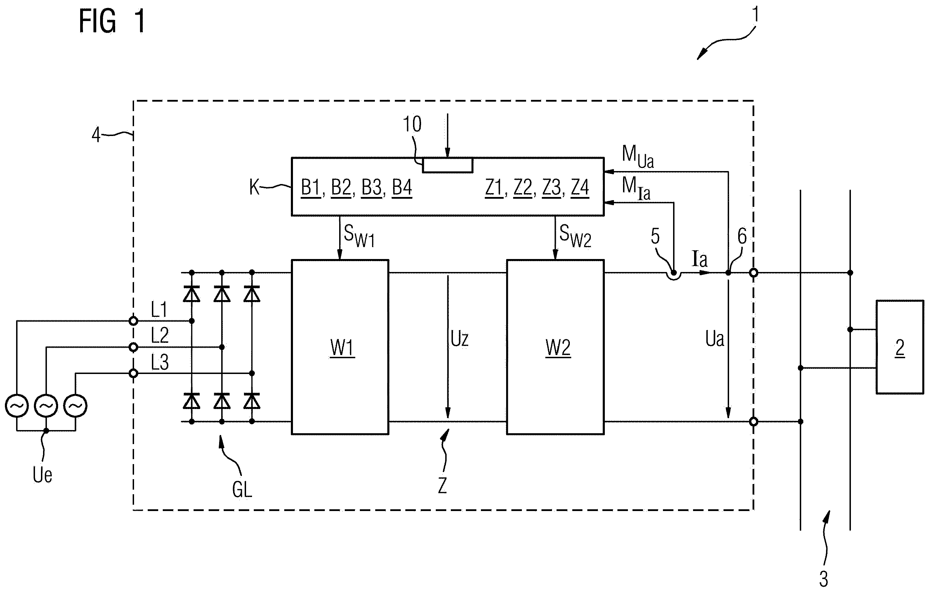

Eine in FIG 1 schematisch dargestellte erfindungsgemäße elektronische Stromversorgungsvorrichtung 1 ist beispielhaft als eine getaktete Stromversorgung bzw. als ein Schaltnetzteil (Schaltnetzgerät) ausgebildet.

Sie weist ein Gehäuse 4 auf und ist ausgebildet, auf einer Hutschiene befestigt zu werden. Somit kann sie besonders einfach in Schaltschränken installiert werden.

In der Regel umfasst eine als ein Schaltnetzteil (Schaltnetzgerät) ausgebildete getaktete Stromversorgungs- und/oder -verteilungsvorrichtung einen Leistungsteil und eine Steuer- und/oder Regeleinheit (im Folgenden als "Controller" bezeichnet) zur Ansteuerung des Leistungsteils. Der Leistungsteil besteht im Wesentlichen aus einem Wandler, wobei unterschiedliche Ausprägungen wie zum Beispiel Sperrwandler, Flusswandler, Gegentaktwandler, Aufwärtswandler, Abwärtswandler etc. bekannt sind. Abhängig von der eingangsseitig und ausgangsseitig auftretenden Stromform unterscheidet man des Weiteren zum Beispiel Gleichstrom-Gleichstrom-Wandler (DC-DC-Wandler), Wechselstrom-Gleichstrom-Wandler (AC-DC-Wandler) oder Gleichstrom-Wechselstrom-Wandler (DC-AC-Wandler).

Im Ausführungsbeispiel gemäß FIG 1 wird davon ausgegangen, dass eine Niederspannungs-Gleichspannungslast 2 (im Folgenden nur noch als "Last" bezeichnet) aus einer Wechselspannungsquelle Uₑ versorgt werden soll und somit ein AC-DC-Wandler zum Einsatz kommt. Dies ist jedoch nicht als beschränkend anzusehen, vielmehr können im Rahmen der Erfindung auch andere Arten von Wandlern zum Einsatz kommen.

Der AC-DC-Wandler umfasst vorzugsweise einen Resonanzwandler, wie er beispielhaft in der EP 3 322 076 A1 beschrieben ist, wobei aber auch dies nicht als beschränkend anzusehen ist.

Die Stromversorgungsvorrichtung1 umfasst hierzu eine Gleichrichtereinheit GL, eine erste Wandlerstufe W1, einen Zwischenkeis Z und eine zweite Wandlerstufe W2.

Die Stromversorgungsvorrichtung 1 ist eingangsseitig an die Wechselspannungsquelle Uₑ bzw. eine dreiphasige Netzspannung Uₑ mit drei Phasen L₁, L₂, L₃ angebunden. Die Netzspannung Uₑ bildet die Eingangsspannung für die Gleichrichtereinheit GL der Stromversorgungsvorrichtung 1. Durch die Gleichrichtereinheit GL, welche beispielsweise als 6-pulsiger Gleichrichter ausgeführt ist, wird die Netzspannung Uₑ gleichgerichtet.

Durch die erste Wandlerstufe W1 kann ein Spannungsübersetzungsverhältnis zumindest kleiner oder gleich 1, wahlweise auch größer als 1, eingestellt werden. Die erste Wandlerstufe W1 weist eine Tiefsetzsteller-Funktionalität auf. D.h. die erste Wandlerstufe W1 kann beispielsweise als Abwärtswandler bzw. Tiefsetzsteller ausgeführt sein oder es wird ein Wandler wie z.B. Hoch-Tiefsetzsteller, Flusswandler, Cuk-Wandler, SEPICWandler, etc. eingesetzt, welcher eine Tiefsetzsteller-Funktion aufweist. Die erste Wandlerstufe W1 ist eingangsseitig mit der Gleichrichtereinheit GL verbunden. Die Ausgangsspannung der Gleichrichtereinheit GL - im Prinzip die gleichgerichtete Netzspannung Uₑ - bildet die Eingangsspannung der ersten Wandlerstufe W1. Von der Ausgangsspannung der ersten Wandlerstufe W1 wird in dem Zwischenkreis Zeine Zwischenkreisspannung U_{z} gebildet.

Die zweite Wandlerstufe W2 ist eingangsseitig mit der ersten Wandlerstufe W1 verbunden. Die zweite Wandlerstufe W2 ist als ein Resonanzwandler, insbesondere als so genannter LLC-Wandler, ausgeführt. Die Zwischenkreisspannung U_{z} bzw. die Ausgangsspannung der ersten Wandlerstufe W1 bildet die Eingangsspannung der zweiten Wandlerstufe W2 bzw. des Resonanzwandlers W2.

Der Zwischenkreis Z kann beispielsweise einen Zwischenkreiskondensator C umfassen. Im Zwischenkreis Z können noch weitere Komponenten angeschlossen sein, z.B. weitere Kondensatoren zur Verbesserung der EMV-Eigenschaften.

Ausgangsseitig ist die Stromversorgungsvorrichtung 1 elektrisch über einen Energiebus 3 (wie hier dargestellt) oder alternativ direkt (nicht dargestellt) mit der Last 2 verbindbar bzw. verbunden. Es können dabei auch mehrere Lasten vorhanden sein, die parallel an den Energiebus 3 angeschlossen sind und daraus mit elektrischer Energie versorgt werden.

Durch eine Regelung des Energieflusses durch die Wandlerstufen W1, W2 mit Hilfe eines, vorzugsweise digital arbeitenden, Controllers K wird die meist unstabilisierte Eingangsspannung Uₑ in eine geregelte Ausgangsspannung Uₐ (z.B. eine Gleichspannung von 28 V oder 48 V) zur Versorgung der Last 2 umgewandelt. Die Gleichrichtereinheit GL im Zusammenwirken mit der ersten Wandlerstufe W1 erzeugt dabei eine konstante Zwischenkreisspannung U_{Z} und die nachgeschaltete zweite Wandlerstufe W2 dient dann zur Regelung der Ausgangsspannung Uₐ und des Ausgangsstromes Iₐ.

Zur Regelung des Energieflusses durch die Wandlerstufen W1, W2 weisen diese nicht näher dargestellte elektronische Schaltelemente auf, die von dem Controller K über Stellgrößen S_{W1}, S_{W2} ansteuerbar sind.

Weiterhin umfasst die Stromversorgungsvorrichtung 1 eine Strommesseinrichtung 5 (z.B. einen Messwiderstand) zur Messung des Ausgangsstromes Ia und eine Spannungsmesseinrichtung 6 zur Messung der Ausgangsspannung Uₐ. Die Strommesseinrichtung 5 stellt dem Controller K analoge Messwerte Mₐ des Ausgangsstromes Iₐ und die Spannungsmesseinrichtung 6 stellt dem Kontroller K analoge Messwerte M_{Ua} der Ausgangsspannung Uₐ bereit, die dann am Eingang des Controllers K einer A/D-Wandlung unterzogen werden.

Die Stromversorgungsvorrichtung 1 stellt somit ausgangsseitig für die Last 2 eine geregelte Ausgangsgleichspannung Uₐ und einen geregelten Ausgangsgleichstrom Iₐ bereit. Beispielsweise beträgt die Gleichspannung nominal 48 V (Nennspannung) und der Gleichstrom nominal 60 A (Nennstrom).

Die Last 2 kann kurzzeitig erhöhte Anforderungen an den Ausgangsstrom Iₐ bzw. die Ausgangsleistung stellen, etwa in einem Anlauf oder während Schaltvorgängen. Die Stromversorgungsvorrichtung 1 bietet deshalb die Fähigkeit, der Last 2 für begrenzte Zeit mehr Strom und mehr Leistung bereitzustellen, als die Stromversorgungsvorrichtung 1 nominal liefern kann. Hierdurch kommt es jedoch zu einer thermischen Belastung (Aufwärmung) der Stromversorgungsvorrichtung 1. Um eine thermische Überlastung der Stromversorgungsvorrichtung 1 zu vermeiden, wird der erhöhte Strom bzw. die erhöhte Leistung nur für eine begrenzte Zeit zur Verfügung gestellt. Danach ist eine längere Abkühlphase erforderlich.

Die maximal zulässige Zeit für eine kurzzeitige Überlast wird dabei abhängig von der Höhe der Überlast begrenzt. Hierzu sind in dem Controller K für den Ausgangsstrom Iₐ zwei oder mehr unmittelbar benachbarte Überstrombereiche B1, B2, ... definiert, die oberhalb eines Schwellwertes (hier des Nennstromes I_{N}) liegen und denen jeweils eine maximale Überstromdauer zugeordnet ist.

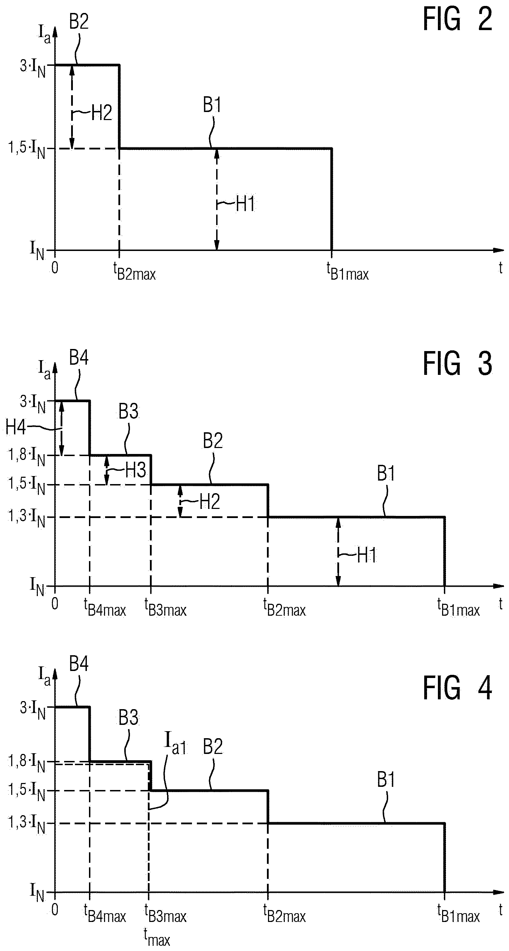

FIG 2 zeigt hierzu beispielhaft für einen Ausgangsstrom Ia über der Zeit t ein Überlastprofil mit zwei Überstrombereichen B1, B2 mit den jeweils zugeordneten maximalen Überstromdauern t_{B1max}, t_{B2max}. Die Überstrombereiche sind in Bezug auf den Nennstrom I_{N} definiert und liegen oberhalb des Nennstromes I_{N}.

| Bereich | Bereichsgrenzen | maximale Überstromdauer |
|---|---|---|
| B1 | > I_{N} bis 1,5*I_{N} | t_{B1max} |
| B2 | > 1,5*I_{N} bis 3*I_{N} | t_{B2max} |

Die maximalen Überstromdauern t_{B1max}, t_{B2max} sind derart gewählt, dass eine unzulässig hohe thermische Belastung der Stromversorgungsvorrichtung 1 vermieden wird. Sie sind in der Regel umso kleiner, je höher der Überstrombereich liegt.

Die Überstrombereiche B1, B2 werden durch jeweils eine obere und eine untere Bereichsgrenze definiert. Die obere Bereichsgrenzen wird durch einen größeren Wert des Überstroms und die untere Bereichsgrenze wird durch einen kleineren Wert des Überstroms definiert. Eine "Höhe" H1 bzw. H2 der Überstrombereiche B1 bzw. B2 wird durch eine Differenz zwischen dem größerem und dem kleineren Wert des Überstroms definiert.

Zum besseren Verständnis zeigt FIG 2 hierbei nur eine prinzipielle und nicht maßstabsgerechte Darstellung des Ausgangsstromes Iₐ über der Zeit t (gleiches gilt für die später gezeigten Figuren 3 bis 8).

Durch einen Nutzer der Stromversorgungsvorrichtung 1 sind die in dem Controller K definierten Überstrombereiche B1, B2 hinsichtlich ihrer Höhe, ihrer jeweils zugeordneten maximalen Überstromdauer und/oder ihrer Anzahl an einen Überstrombedarf der Last 2 anpassbar. Die Stromversorgungsvorrichtung 1 bzw. der Controller K weist hierzu eine Nutzer-Schnittstelle 10 auf. Die Nutzer-Schnittstelle 10 kann eine in die Stromversorgungsvorrichtung 1 integrierte grafische Benutzeroberfläche (z.B. ein Display). Es kann aber auch eine Schnittstelle 10 sein, über die ein gesondertes Gerät mit einer grafische Benutzeroberfläche (z.B. ein Notebook oder Smartphone) über das Internet oder ein anderes Kommunikationsmedium mit der Stromversorgungsvorrichtung 1 verbindbar ist.

Je nachdem, ob die Last für sehr kurze Zeit einen sehr hohen Überstrombedarf oder aber für eine längere Zeit einen eher geringen Überstrombedarf hat, können die Überstrombereiche dann individuell an die Last 2 angepasst werden. Hierdurch wird eine noch individuellere und somit bessere Stromversorgung der Last 2 ermöglicht.

Gemäß einem ersten Beispiel werden einem Nutzer über die Schnittstelle 10 der Stromversorgungsvorrichtung 1 drei Überlastprofile P1 bis P3 mit jeweils gleicher Anzahl, aber unterschiedlicher Höhe und teilweise unterschiedlichen maximalen Überstromdauern der Überstrombereiche gemäß folgender Tabelle zur Auswahl angeboten:

| Profil | Bereich | Bereichsgrenzen | maximale Überstromdauer |
|---|---|---|---|
| P1 | 1 | > I_{N} bis 1,5*I_{N} | 5 s |
| | 2 | > 1 ,5*I_{N} bis 3*I_{N} | 25 ms |
| P2 | 1 | > I_{N} bis 1,3*I_{N} | 10 s |
| | 2 | > 1 ,3*I_{N} bis 3*I_{N} | 25 ms |
| P3 | 1 | > I_{N} bis 1,8*I_{N} | 1 s |
| | 2 | > 1 ,8*I_{N} bis 3*I_{N} | 25 ms |

Die Überstrombereiche liegen dabei oberhalb des Nennstromes I_{N} der Stromversorgungsvorrichtung 1.

Gemäß einem zweiten Beispiel werden einem Nutzer drei Überlastprofile N1 bis N3 mit jeweils unterschiedlicher Anzahl und teilweise unterschiedlicher Höhe und unterschiedlichen maximalen Überstromdauern der Überstrombereiche gemäß folgender Tabelle zur Auswahl angeboten:

| Profil | Bereich | Bereichsgrenzen | maximale Überstromdauer |
|---|---|---|---|
| N1 | 1 | > I_{N} bis 1,5*I_{N} | 5 s |
| | 2 | > 1 ,5*I_{N} bis 3*I_{N} | 25 ms |
| N2 | 1 | > I_{N} bis 1,3*I_{N} | 10 s |
| | 2 | > 1 ,3*I_{N} bis 1,5*I_{N} | 5 s |
| | 3 | > 1 ,5*I_{N} bis 3*I_{N} | 25 ms |
| N3 | 1 | > I_{N} bis 1,3*I_{N} | 10 s |
| | 2 | > 1 ,3*I_{N} bis 1,5*I_{N} | 5 s |
| | 3 | > 1 ,5*I_{N} bis 1,8*I_{N} | 1 s |
| | 4 | > 1,8*I_{N} bis 3*I_{N} | 25 ms |

FIG 3 zeigt hierzu beispielhaft über der Zeit t für einen Ausgangsstrom Ia ein Profil mit 4 Überstrombereichen B1, B2, B3, B4 und mit den jeweils zugeordneten Höhen H1, H2, H3, H4 und maximalen Überstromdauern t_{B1max}, t_{B2max}, t_{B3max}, t_{B4max}.

Der Controller K erfasst den Ausgangsstrom Ia und die Ausgangsspannung Uₐ und stellt durch eine entsprechende Ansteuerung der Wandlerstufen W1, W2 sicher, dass sich ein nachfolgend beschriebenes Überlastverhalten einstellt.

Innerhalb eines der Überstrombereiche B1, B2, B3 bzw. B4, d.h. bei einem zweitweisen Verlauf des Ausgangsstrom Iₐ nur innerhalb dieses einen Überstrombereiches, wird der Ausgangsstrom Ia nur für eine maximale Dauer bereitgestellt, die der dem jeweiligen Bereich zugeordneten maximalen Überstromdauer t_{B1max}, t_{B2max}, t_{B3max} bzw. t_{B4max} entspricht.

Nach Ablauf der maximalen Dauer wird der Ausgangsstrom la auf einen definierten Wert begrenzt, der vorzugsweise unterhalb des untersten Überstrombereiches B1 liegt, hier z. B. den Nennstrom I_{N}. Es wäre aber auch eine Begrenzung auf den Dauerkurzschlussstrom der Stromversorgungsvorrichtung 1 möglich.

Der definierte Wert kann dabei auch von einem oder mehreren Parametern abhängig sein, z.B. von der Umgebungstemperatur, von Kühlbedingungen oder von der Eingangsspannung der Stromversorgungsvorrichtung. Der definierte Wert kann somit auch dynamisch erst kurz vor dem Zeitpunkt der Strombegrenzung ermittelt werden.

FIG 4 zeigt hierzu beispielhaft für das Profil gemäß FIG 3 über der Zeit t einen für die Last 2 bereitgestellten Überstrom Iₐ₁, der zum Zeitpunkt t = 0 in den Überstrombereich B3 springt und dann innerhalb des Überstrombereichs B3 verläuft. Wie ersichtlich ist, wird der Überstrom Iₐ₁ nur bis zu der dem Bereich B3 zugeordneten maximalen Überstromdauer t_{B3max} bereitgestellt und anschließend dann auf den Nennstrom I_{N} begrenzt.

Es ist aber auch denkbar, dass die maximale Dauer für die Bereitstellung des Ausgangsstromes Ia über die Nutzerschnittstelle 10 auf einen vorgebbaren Wert tₘₐₓ innerhalb der maximalen Überstromdauer t_{B3max} des Überstrombereiches begrenzt wird. Durch eine derartige Reduzierung der maximalen Überstromdauer kann beispielsweise gezielt eine Last geschützt werden oder es kann gezielt ein gewünschter Verlauf des Ausgangsstromes Iₐ eingestellt werden.

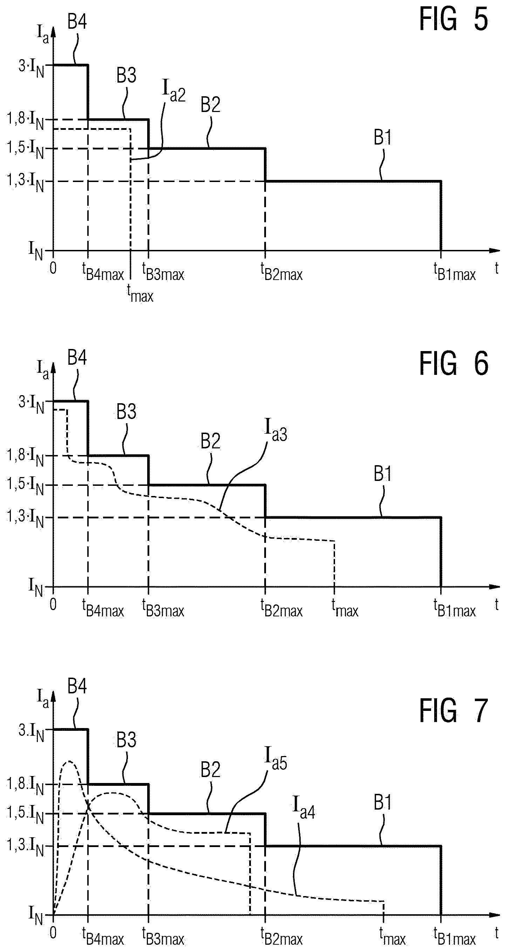

FIG 5 zeigt hierzu beispielhaft für das Profil gemäß FIG 3 über der Zeit t einen für die Last 2 bereitgestellten Überstrom Iₐ₂, der zum Zeitpunkt t = 0 in den Überstrombereich B3 springt und dann innerhalb des Überstrombereichs B3 verläuft, wobei aber von einem Nutzer für den Bereich B3 eine maximale Überstromdauer tₘₐₓ vorgegeben wurde, die kleiner ist als die maximale Überstromdauer t_{B3max} des Überstrombereichs B3. Wie ersichtlich ist, wird der Überstrom Iₐ₂ nur bis zu der vom Nutzer eingestellten maximalen Überstromdauer tₘₐₓ bereitgestellt und anschließend dann auf den Nennstrom IN begrenzt.

Verlässt der Ausgangsstrom la zwischenzeitlich den Überstrombereich B3, kann die maximale Dauer zusätzlich auch abhängig von etwaigen Abkühlzeiten sein.

Innerhalb mehrerer der Überstrombereiche B1, B2, B3 bzw. B4, d.h. bei einem zweitweisen Verlauf des Ausgangsstrom Iₐ nur innerhalb dieser mehreren Überstrombereiche, wird der Ausgangsstrom Iₐ nur für eine maximale Dauer bereitgestellt, die von einer Verweildauer des Ausgangsstromes Iₐ in den Überstrombereichen abhängt.

FIG 6 zeigt hierzu für den Fall der vier Überstrombereiche B1, B2, B3, B4 gemäß FIG 3 den Verlauf eines Ausgangsstroms Iₐ₃, der zum Zeitpunkt t = 0 in den Überstrombereich B4 springt und dann sukzessive über die Überstrombereiche B3, B2 und B1 abfällt. Der Ausgangsstrom Iₐ₃ wird hier nur für eine maximale Dauer tₘₐₓ bereitgestellt, die von einer Verweildauer des Ausgangsstromes Iₐ₃ in den Überstrombereichen B1, B2, B3, B4 abhängt.

Es ist somit ein Wechseln bzw. Umschalten des Ausgangsstromes la zwischen den Überstrombereichen B1, B2, B3, B4 möglich, wobei die maximale Dauer der Bereitstellung des Überstromes automatisch angepasst wird. Die Stromversorgungsvorrichtung 1 kann sich somit automatisch selbst der Last 2 anpassen, d.h. sie ist quasi "selbst adaptiv" in Bezug auf die Last 2. Ein Nutzer muss sich dann nicht vertieft mit den Leistungsanforderungen seiner Niederspannungslast 2 beschäftigen.

Nach Ablauf der maximalen Dauer tmax wird der Ausgangsstrom Iₐ₃ auf den Nennstrom In begrenzt.

Verlässt der Ausgangsstrom zwischenzeitlich die Überstrombereiche B1, B2, B3, B4, kann die maximale Dauer tₘₐₓ zusätzlich auch abhängig von etwaigen Abkühlzeiten sein.

FIG 7 zeigt als ein weiteres Beispiel für den Fall der vier Überstrombereiche B1, B2, B3, B4 gemäß FIG 3 den Verlauf eines Ausgangsstroms Ia4, der zu Beginn über sämtliche Überstrombereiche B1, B2, B3 in den Überstrombereich B4 ansteigt und dann sukzessive über die Überstrombereiche B3, B2 und B1 wieder abfällt. Der Ausgangsstrom Ia4 wird auch hier nur für eine maximale Dauer tₘₐₓ bereitgestellt, die von einer Verweildauer des Ausgangsstromes Ia4 in den Überstrombereichen B1, B2, B3, B4 abhängt, und führt im Ausführungsbeispiel dann im Überstrombereich B1 zur Strombegrenzung auf den Nennstrom I_{N}. Bei anders gelagerten Stromverläufen und Verweildauern kann die Strombegrenzung aber auch schon in einem früheren Überstrombereich erfolgen, wie beispielhaft anhand des Ausgangsstromes Iₐ₅ gezeigt ist, der nur in den Überstrombereichen B3 ansteigt und anschließend bereits im Überstrombereich B2 auf den Nennstrom I_{N} begrenzt wird.

Zur Ermittlung der maximalen Dauer des Überstromes in den Ausführungsbeispielen gemäß FIG 2 bis 7 ist jedem der Überstrombereiche jeweils ein Zähler zugeordnet.

Im Fall von FIG 2 ist dem Überstrombereich B1 ein Zähler Z1 und dem Überstrombereich B2 ein Zähler Z2 zugeordnet. Im Fall von FIG 3 - 7 ist jedem der Überstrombereiche B1, B2, B3, B4 jeweils ein Zähler Z1, Z2, Z3 bzw. Z4 zugeordnet

Die weiteren Ausführungen beziehen sich nun auf das Ausführungsbeispiel gemäß FIG 3 - 7, gelten aber gleichermaßen auch für das Ausführungsbeispiel gemäß FIG 2.

Mit den Zählern Z1, Z2, Z3, Z4 wird eine thermische Belastung (Erwärmung) bzw. Entlastung (Abkühlung) der Stromversorgungsvorrichtung 1 durch den jeweiligen Überstrombereich B1, B2, B3 bzw. B4 ermittelt.

Die thermische Belastung (Erwärmung) der Stromversorgungsvorrichtung 1 durch einen der Überstrombereiche wird dadurch berücksichtigt, dass der dem Überstrombereich zugeordnete Zähler seine Zählerwerte in einer ersten Richtung ändert (z.B. seine Zählerwerte erhöht), wenn der Ausgangsstrom innerhalb des Überstrombereiches liegt.

Die thermische Entlastung (Abkühlung) der Stromversorgungsvorrichtung 1 in Bezug auf einen der Überstrombereiche wird dadurch berücksichtigt, dass der dem Überstrombereich zugeordnete Zähler seine Zählerwerte in einer zu der ersten Richtung entgegengesetzten zweiten Richtung ändert (z.B. seine Zählerwerte reduziert), wenn der Ausgangsstrom Ia unterhalb des ihm zugeordneten Überstrombereiches liegt, insbesondere wenn der Ausgangsstrom Ia nach Ablauf einer maximalen Dauer tₘₐₓ auf einen vordefinierten Wert wie z.B. den Nennstrom I_{N} begrenzt wird.

Es kommen dabei vorzugsweise jeweils gleichartig zählende Zähler zum Einsatz.

Die Zähler Z1, Z2, Z3, Z4 sind in dem Ausführungsbeispiel gemäß FIG 1 direkt in dem Controller K implementiert, können aber auch in einer Einrichtung außerhalb des Controllers K implementiert sein, mit der der Controller K in Verbindung steht.

Der Zählerwert repräsentiert somit sehr einfach eine zu einem bestimmten Zeitpunkt vorliegende Höhe der thermischen Belastung der Stromversorgungsvorrichtung 1 durch den jeweilig zugeordneten Überstrombereich B1, B2, B3 bzw. B4.

Die Geschwindigkeit der Erhöhung bzw. der Reduzierung der Zählerwerte repräsentiert dann direkt die Zunahme bzw. Abnahme der thermischen Belastung durch den jeweiligen Ausgangsstrom la. In der Regel wird die Geschwindigkeit der Erhöhung der Zählerwerte umso schneller erfolgen, je höher der Strom ist, und immer deutlich höher sein, als die Geschwindigkeit der Reduzierung Zählerwerte aufgrund Abnahme der thermischen Belastung durch eine Abkühlung.

Zähler unterschiedlicher Überstrombereiche können dann mit jeweils unterschiedlichen Geschwindigkeiten zählen. Beispielsweise kann ein Zähler eines niedrigeren Überstrombereiches mit einer niedrigeren Geschwindigkeit als ein Zähler eines höheren Überstrombereiches zählen.

Im Fall des Profils von FIG 3 zählt beispielsweise der Zähler für den Überstrombereich B1 von einem Ausgangswert 0 ausgehend mit einer derartigen Geschwindigkeit aufwärts, dass er nach t_{B1max} (z.B. 10 s) seinen Maximalwert (z.B. 100) erreicht. Der Zähler für den Überstrombereich B2 zählt von einem Ausgangswert 0 ausgehend mit einer derartigen Geschwindigkeit aufwärts, dass er nach t_{B2max} (z.B. 5 s) seinen Maximalwert (z.B. 100) erreicht. In entsprechender Weise zählen die Zähler für die Überstrombereiche B3 und B4 von ihrem Ausgangswert 0 ausgehend mit einer derartigen Geschwindigkeit aufwärts, dass sie nach t_{B3max} (z.B. 1 s) bzw. t_{B4max} (z.B. 25ms) ihren jeweiligen Maximalwert (z.B. 100) erreichen.

Die einem jeweiligen Überstrombereich zugeordnete maximale Überstromstromdauer kann dann durch den Maximalwert (z.B. 100) des zugeordneten Zählers definiert sein.

Im vorstehend im Zusammenhang mit FIG 4 beschriebenen Fall, dass der Ausgangsstrom Ia ausschließlich nur innerhalb eines des Überstrombereiches B3 verläuft, ist dann die maximale Dauer der Bereitstellung des Überstromes erreicht, wenn der dem Überstrombereich B3 zugeordnete Zähler Z3 seinen Maximalwert (z.B. 100) erreicht.

Im vorstehend im Zusammenhang mit FIG 5 beschriebenen Fall der Vorgabe einer geringeren maximalen Überstromdauer als die dem Bereich zugeordnete Überstromdauer kann beispielsweise der Maximalwert des Zählers reduziert werden (z.B. von 100 auf 90).

In den im Zusammenhang mit FIG 6 und FIG 7 beschriebenen Fällen, dass der Ausgangsstrom la innerhalb der Überstrombereiche B1, B2, B3, B4 verläuft ist dann die maximale Dauer der Bereitstellung des Überstromes erreicht, wenn die Summe der Zählerwerte der den Überstrombereichen B1, B2, B3, B4 zugeordneten Zähler Z1, Z2, Z3, Z4 einen definierten Maximalwert (z.B. 100) erreicht.

Wenn der Ausgangsstrom Iₐ nach Ablauf der maximalen Dauer tₘₐₓ auf einen definierten Wert begrenzt wird, bei dem es zu einer Abkühlung (d.h. Reduzierung der thermischen Belastung) kommt (siehe in FIG 4 bis FIG 7 die Begrenzung auf den Nennstrom I_{N}), führt dies zu einer entsprechenden Reduzierung der Zählerwerte der Zähler Z1 bis Z4.

Eine Begrenzung des Ausgangsstrom la auf den definierten Wert (hier den Nennstrom I_{N}) kann dann aufgehoben werden, wenn mindestens einer der Zähler Z1 bis Z4 einen anderen (hier niedrigeren) Zählerstand als im Zeitpunkt des Eintretens der Strombegrenzung erreicht hat. Diese Zählerstand kann beispielsweise ein Ausgangswert des Zählers sein (z.B. 0). Vorzugsweise wird die Begrenzung des Ausgangsstrom la auf den definierten Wert dann aufgehoben, wenn alle Zähler Z1 bis Z4 ihren jeweiligen Ausgangswert erreicht haben (z.B. 0).

Die Zeitdauer für die Begrenzung des Ausgangsstromes kann auch einstellbar sein, soweit dies thermisch vertretbar ist. Die Zeitdauer bis zum Aufheben der Strombegrenzung kann auch abhängig sein von einem oder mehreren Parametern wie z.B. von Umgebungstemperatur, Kühlbedingung oder Eingangsspannung der Stromversorgung.

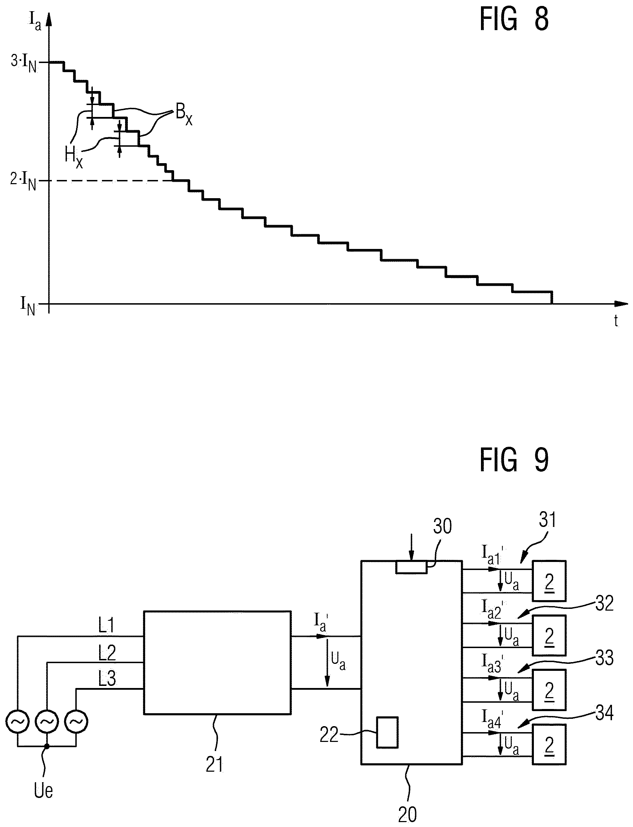

Bei einer in FIG 8 gezeigten vorteilhaften Ausgestaltung sind eine Vielzahl von Überstrombereichen Bₓ definiert, wobei die Höhe Hₓ der Überstrombereiche Bₓ weniger als 1/10 des Nennstromes I_{N} der Stromversorgungsvorrichtung 1 beträgt. Die Höhe und maximale Überstromdauer der Überstrombereiche Bₓ kann dabei jeweils gleich oder auch unterschiedlich sein. Mit den Überstrombereichen kann dann "selbst adaptiv" in Bezug auf die Last 2 im Idealfall eine I²t-Chrakteristik eines Leitungsschutzschalters nachgebildet werden. Hierdurch können auch kurzzeitige sehr hohe Anlaufströme von Motoren zugelassen werden, eine lange geringe Überlastung dieses Motors dann aber nach entsprechender Zeit trotzdem zur Strombegrenzung führen. Eine Begrenzung in der Höhe und Anzahl der Überstrombereiche kann sich ggf. lediglich durch eine Auflösungsgrenze in der A/D-Wandlung von Messwerten des Ausgangsstromes Iₐ und einer benötigten Rechenzeit im Controller ergeben.

FIG 9 zeigt eine schematische Darstellung einer erfindungsgemäßen Stromverteilungsvorrichtung 20 mit mehreren, hier vier, Ausgangsströmen Iₐ₁', Iₐ₂', Iₐ₃', Iₐ₄'. Die Stromversorgungsvorrichtung 20 ist als ein Sicherungsmodul bzw. Selektivitätsmodul ausgebildet, welches einen von einer Stromversorgungsvorrichtung 21 bereitgestellten Strom Iₐ' auf vier Abzweige 31, 32, 33, 34 aufteilt, die jeweils eine Niederspannungslast 2 mit Strom versorgen und welches die Ausgangsströme Iₐ₁', Iₐ₂', I_{a3'}, Iₐ₄' in den einzelnen Abzweigen 31, 32, 33, 34 zuverlässig auf Überlast und Kurzschluss überwacht. Die Lasten 2 können dabei auch jeweils unterschiedlich sein.

Die Stromversorgungsvorrichtung 21 ist eingangsseitig an ein Wechselspannungsnetz Uₑ angeschlossen und setzt die Wechselspannung, wie z.B. eine 400V- Wechselspannung, auf ein für die Lasten 2 vordefiniertes, niedrigeres und üblicherweise konstantes Spannungsniveau (z.B. 24 V oder 48 V Gleichspannung als Nennausgangsspannung) auf einer Ausgangsseite der Stromquelle 21 um.

Die Stromverteilungsvorrichtung 20 ist derart ausgebildet, dass sie in Bezug auf die einzelnen Abzweige 31, 32, 33, 34 bzw. die einzelnen Ausgangsströme Iₐ₁', Iₐ₂', Iₐ₃' und Iₐ₄' und deren jeweilige Lasten 2 jeweils die gleichen Funktionalitäten und somit das gleiche Überlastverhalten hat wie die Stromversorgungsvorrichtung 1 gemäß FIG 1 und wie anhand der FIG 2 bis 8 beschrieben.

Für jeden der Ausgangsströme Iₐ₁', Iₐ₂', Iₐ₃', Iₐ₄' sind somit in der Stromverteilungsvorrichtung 20 jeweils mindestens zwei Überstrombereiche definiert, denen jeweils eine maximale Überstromdauer zugeordnet ist, wobei die Überstrombereiche hinsichtlich ihrer jeweiligen Höhe, ihrer jeweiligen maximalen Überstromdauer und/oder ihrer jeweiligen Anzahl an einen Überstrombedarf der jeweiligen Niederspannungslast 2 anpassbar sind. Die Stromverteilungsvorrichtung 20 weist für diese Anpassungen eine Nutzerschnittstelle 30 auf.

Zusätzlich zu dem Überstromverhalten der Stromversorgungsvorrichtung 1 gemäß FIG 1 ist bei der Stromverteilungsvorrichtung 20 eine maximale Dauer einer Bereitstellung eines ersten der vier Ausgangsströme, hier beispielsweise des Ausgangsstromes Iₐ₁', innerhalb eines der für ihn definierten Überstrombereiche oder innerhalb mehrerer der für ihn definierten Überstrombereiche abhängig von zumindest einem anderen der mehreren Ausgangsströme, hier beispielsweise der anderen drei Ausgangsströme Iₐ₂', Iₐ₃', Iₐ₄'.

Hierbei liegt der Gedanke zugrunde, dass für einen oder mehrere der anderen Ausgangsströme Iₐ₂', Iₐ₃', Iₐ₄' zeitgleich frei gehaltene, aber nicht genutzte thermische Auslastungen der Stromverteilungsvorrichtung 20 (d.h. deren jeweilige "Überlastkontingente") für den Ausgangsstrom Iₐ₁' genutzt werden können, um bei diesem die maximale Dauer der Bereitstellung eines Überlaststromes zu erhöhen. Dies könnte beispielsweise anhand einer festgelegten Priorisierung der Ausgangsströme Iₐ₂', Iₐ₃', Iₐ₄' erfolgen.

Bei Einsatz von Zählern kann dies sehr einfach durch eine übergeordnete Überwachung der Zählerwerte sämtlicher Zähler der Ausgangsströme Iₐ₂', I_{a3'}, Iₐ₄' erfolgen. Beispielsweise kann geprüft werden, ob eine Kombination, insbesondere Summe, der Zählerwerte dieser Zähler eine vorgegebene Bedingung (z.B. Maximalwert) erfüllt und in Abhängigkeit davon die maximale Dauer der Bereitstellung des ersten Ausgangsstromes Iₐ₁' erfolgen.

Eine übergeordnete Überlastmanagementeinheit 22 kann dann die bestehenden Überlastkontingente den einzelnen Ausgangsströmen zuteilen.

Dies könnte beispielsweise dann relevant sein, wenn Ausgangskreise der Ausgangsströme Iₐ₂', Iₐ₃', Iₐ₄' thermisch miteinander verbunden sind, z.B. über einen gemeinsamen Kühlkörper, eine gemeinsame Drossel für einen Summenstrom der Ausgangsströme, eine gemeinsame 0V-Klemme der Ausgangsströme etc.

Frei gehaltene, aber nicht genutzte thermische Auslastungen ("Überlastkontingente") der Stromverteilungsvorrichtung 20 können natürlich nicht nur für den Ausgangsstrom Iₐ₁' genutzt werden, sondern auch für jeden anderen der Ausgangsströme Iₐ₂', I_{a3'}, Iₐ₄' oder eine Kombination davon.

Durch eine eingeschränkte thermische Verbindung kann es nötig sein, dass die übergeordnete Überlastmanagementeinheit 22 die Zählerstände im Fall einer Addition nicht nur einfach addiert, sondern jedem einzelnen Ausgang auch eine erhöhte Überstromdauer zuordnet, solange die gesamte Überlast nicht genutzt ist, diese Überstromdauer aber geringer ist als die Summe der noch nicht abgerufenen Überstromdauern, um den Überstrom führenden Ausgang nicht lokal zu überhitzen.

## Patentansprüche

1. Verfahren zur Versorgung zumindest einer Niederspannungslast (2) mit einem Ausgangsstrom (la) einer elektronischen Stromversorgungs- und/oder -verteilungsvorrichtung (1, 20), wobei für den Ausgangsstrom (Iₐ) mindestens zwei Überstrombereiche (B1, B2) definiert sind, denen jeweils eine maximale Überstromdauer (t_{B1max}; t_{B2max}) zugeordnet ist,
**dadurch gekennzeichnet, dass** die Überstrombereiche (B1, B2) hinsichtlich ihrer Höhe (H1, H2), ihrer jeweiligen maximalen Überstromdauer (t_{B1max}; t_{B2max}) und/oder ihrer Anzahl an einen Überstrombedarf der Niederspannungslast (2) anpassbar sind.

2. Verfahren nach Anspruch 1, bei dem mehrerer Niederspannungslasten (2) mit jeweils einem Ausgangsstrom (Iₐ₁ bis Iₐ₄) einer elektronischen Stromversorgungs- und/oder -verteilungsvorrichtung (1, 20) versorgt werden, wobei für jeden der Ausgangsströme (Iₐ₁ bis Iₐ₄) in der Stromversorgungs- und/oder-verteilungsvorrichtung (1, 20) jeweils mindestens zwei Überstrombereiche (B1, B2) definiert sind, denen jeweils eine maximale Überstromdauer (t_{B1max}; t_{B2max}) zugeordnet ist, wobei die Überstrombereiche (B1, B2) hinsichtlich ihrer jeweiligen Höhe (H1, H2), ihrer jeweiligen maximalen Überstromdauer (t_{B1max}; t_{B2max}) und/oder ihrer jeweiligen Anzahl an einen Überstrombedarf der jeweiligen Niederspannungslast (2) anpassbar sind.

3. Verfahren nach einem der vorhergehenden Ansprüche, wobei der Ausgangsstrom (Iₐ) innerhalb eines der Überstrombereiche (B1, B2) nur für eine maximale Dauer (tₘₐₓ) bereitgestellt wird, die der dem jeweiligen Überstrombereich zugeordneten maximalen Überstromdauer (t_{B1max}; t_{B2max}) entspricht, oder die einem vorgebbaren Wert innerhalb dieser maximalen Überstromdauer (t_{B1max}; t_{B2max}) entspricht.

4. Verfahren nach einem der vorhergehenden Ansprüche, wobei der Ausgangsstrom (Iₐ) innerhalb mehrerer der Überstrombereiche (B1, B2) nur für eine maximale Dauer (tₘₐₓ) bereitgestellt wird, die von einer Verweildauer des Ausgangsstromes (Iₐ) in den jeweiligen Überstrombereichen (B1, B2) abhängt.

5. Verfahren nach Anspruch 3 oder 4, wobei nach Ablauf der maximalen Dauer (tₘₐₓ) der jeweilige Ausgangsstrom (Iₐ) auf einen definierten Wert (I_{N}) begrenzt oder unterbrochen wird.

6. Verfahren nach einem der vorhergehenden Ansprüche, wobei jedem der Überstrombereiche (B1, B2) jeweils ein Zähler (Z1, Z2) zugeordnet ist.

7. Verfahren nach Anspruch 6, wobei der Zähler (Z1, Z2) seine Zählerwerte in einer ersten Richtung ändert, wenn der Ausgangsstrom (Iₐ) innerhalb des ihm zugeordneten Überstrombereiches (B1, B2) liegt, und vorzugsweise seine Zählerwerte in einer zu der ersten Richtung entgegengesetzten zweiten Richtung ändert, wenn der Ausgangsstrom (Iₐ) unterhalb des ihm zugeordneten Überstrombereiches (B1 bzw. B2) liegt, insbesondere wenn der Ausgangsstrom (Iₐ) nach Ablauf einer maximalen Dauer (tₘₐₓ) auf einen vordefinierten Wert (I_{N}) begrenzt wird.

8. Verfahren nach Anspruch 3 und einem der Ansprüche 6 bis 7, wobei die maximale Dauer (tₘₐₓ) erreicht ist, wenn ein Zählerwert des dem Überstrombereich (B1, B2) zugeordneten Zählers (Z1, Z2) eine vorgegebene Bedingung erfüllt.

9. Verfahren nach Anspruch 4 und einem der Ansprüche 6 bis 7, wobei die maximale Dauer (tₘₐₓ) erreicht ist, wenn eine Kombination, insbesondere Summe, der Zählerwerte der den mehreren Überstrombereichen (B1, B2) zugeordneten Zähler (Z1, Z2) eine vorgegebene Bedingung erfüllt.

10. Verfahren nach einem der Ansprüche 2 bis 9, wobei eine maximale Dauer (tₘₐₓ) einer Bereitstellung eines der mehreren Ausgangsströme (Iₐ₁ bis Iₐ₄) innerhalb eines der für ihn definierten Überstrombereiche oder innerhalb der mehreren für ihn definierten Überstrombereiche abhängig ist von zumindest einem anderen der mehreren Ausgangsströme (Iₐ₁ bis Iₐ₄).

11. Elektronische Stromversorgungs- und/oder -verteilungsvorrichtung (1, 20), die ausgebildet ist zur Bereitstellung zumindest eines Ausgangsstromes (Iₐ) zur Versorgung einer Niederspannungslast (2), wobei für den Ausgangsstrom (Iₐ) mindestens zwei Überstrombereiche (B1, B2) definiert sind, denen jeweils eine maximale Überstromdauer (t_{B1max}; t_{B2max}) zugeordnet ist, **dadurch gekennzeichnet, dass** die Überstrombereiche (B1, B2) hinsichtlich ihrer Höhe (H1, H2), ihrer jeweiligen maximalen Überstromdauer (t_{B1max}; t_{B2max}) und/oder ihrer Anzahl an einen Überstrombedarf der Niederspannungslast (2) anpassbar sind.

12. Elektronische Stromversorgungs- und/oder -verteilungsvorrichtung (1, 20) nach Anspruch 11, die ausgebildet ist zur Bereitstellung mehrerer Ausgangsströme (Iₐ₁ bis Iₐ₄) zur Versorgung jeweils einer Niederspannungslast (2), wobei für jeden der Ausgangsströme (Iₐ₁ bis Iₐ₄) jeweils mindestens zwei Überstrombereiche (B1, B2) definiert sind, denen jeweils eine maximale Überstromdauer (t_{B1max}; t_{B2max}) zugeordnet ist, wobei die Überstrombereiche (B1, B2) hinsichtlich ihrer jeweiligen Höhe (H1, H2), ihrer jeweiligen maximalen Überstromdauer (t_{B1max}; t_{B2max}) und/oder ihrer jeweiligen Anzahl an einen Überstrombedarf der jeweiligen Niederspannungslast (2) anpassbar sind.

13. Elektronische Stromversorgungs- und/oder -verteilungsvorrichtung (1, 20) nach einem der Ansprüche 11 bis 12, die ausgebildet ist, innerhalb eines der Überstrombereiche (B1, B2) den jeweiligen Ausgangsstrom (Iₐ) nur für eine maximale Dauer (tₘₐₓ) bereitzustellen, die der dem jeweiligen Bereich (B1, B2) zugeordneten maximalen Überstromdauer (t_{B1max}; t_{B2max}) entspricht, oder die einem vorgebbaren Wert innerhalb dieser maximalen Überstromdauer (t_{B1max}; t_{B2max}) entspricht.

14. Elektronische Stromversorgungs- und/oder -verteilungsvorrichtung (1, 20) nach einem der Ansprüche 11 bis 13, die ausgebildet ist, innerhalb mehrerer der Überstrombereiche (B1, B2) den jeweiligen Ausgangsstrom (Iₐ) nur für eine maximale Dauer (tₘₐₓ) bereitzustellen, die von einer Verweildauer des Ausgangsstromes (Iₐ) in den jeweiligen Überstrombereichen (B1, B2) abhängt.

15. Elektronische Stromversorgungs- und/oder -verteilungsvorrichtung (1, 20) nach Anspruch 13 oder 14, die ausgebildet ist, nach Ablauf der maximalen Dauer (tₘₐₓ) den jeweiligen Ausgangsstrom (Iₐ) auf einen definierten Wert (I_{N}) zu begrenzen oder zu unterbrechen.

16. Elektronische Stromversorgungs- und/oder -verteilungsvorrichtung (1, 20) nach einem der Ansprüche 11 bis 15, die für jeden der Überstrombereiche (B1, B2) jeweils einen Zähler (Z1, Z2) aufweist.

17. Elektronische Stromversorgungs- und/oder -verteilungsvorrichtung (1, 20) nach Anspruch 16, die derart ausgebildet ist, dass der Zähler (Z1, Z2) seine Zählerwerte in einer ersten Richtung ändert, wenn der Ausgangsstrom (la) innerhalb des ihm zugeordneten Überstrombereiches (B1, B2) liegt, und vorzugsweise seine Zählerwerte in einer zu der ersten Richtung entgegengesetzten zweiten Richtung ändert, wenn der Ausgangsstrom (Iₐ) unterhalb des ihm zugeordneten Überstrombereiches (B1 bzw. B2) liegt, insbesondere wenn der Ausgangsstrom (Iₐ) nach Ablauf einer maximalen Dauer (tₘₐₓ) auf einen vordefinierten Wert (I_{N}) begrenzt ist.

18. Elektronische Stromversorgungs- und/oder -verteilungsvorrichtung (1, 20) nach Anspruch 13 und einem der Ansprüche 16 bis 17, die derart ausgebildet ist, dass die maximale Dauer (tₘₐₓ) erreicht ist, wenn ein Zählerwert des dem Überstrombereich (B1, B2) zugeordneten Zählers (Z1, Z2) eine vorgegebene Bedingung erfüllt.

19. Elektronische Stromversorgungs- und/oder -verteilungsvorrichtung (1, 20) nach Anspruch 14 und einem der Ansprüche 16 bis 17, die derart ausgebildet ist, dass die maximale Dauer (tₘₐₓ) erreicht ist, wenn eine Kombination, insbesondere Summe, der Zählerwerte der den mehreren Überstrombereichen (B1, B2) zugeordneten Zähler (Z1, Z2) eine vorgegebene Bedingung erfüllt.

20. Elektronische Stromversorgungs- und/oder -verteilungsvorrichtung (1, 20) nach einem der Ansprüche 12 bis 19, die derart ausgebildet ist, dass eine maximale Dauer (tₘₐₓ) einer Bereitstellung eines der mehreren Ausgangsströme (Iₐ₁ bis Iₐ₄) innerhalb eines der für ihn definierten Überstrombereiche oder innerhalb der mehreren für ihn definierten Überstrombereiche abhängig ist von zumindest einem anderen der mehreren Ausgangsströme (Iₐ₁ bis Iₐ₄).
